Europäisches Patentamt

European Patent Office

Office européen des brevets

(19)

(11) Numéro de publication: **0 084 745 B1**

(12) **FASCICULE DE BREVET EUROPEEN**

(45) Date de publication du fascicule du brevet:
27.08.86

(51) Int. Cl.⁴: **A 47 J 43/046, B 26 D 1/29**

(21) Numéro de dépôt: 82402004.4

(22) Date de dépôt: 29.10.82

(54) **Appareil de traitement des aliments.**

(30) Priorité: 15.01.82 US 339377

(43) Date de publication de la demande:
03.08.83 Bulletin 83/31

(45) Mention de la délivrance du brevet:
27.08.86 Bulletin 86/35

(84) Etats contractants désignés:
AT BE CH DE FR GB IT LI LU NL SE

(56) Documents cités:
EP - A - 0 024 992
DE - A - 2 542 084
DE - A - 2 752 211
FR - A - 1 206 134
FR - A - 2 147 361
FR - A - 2 403 771
GB - A - 701 674
US - A - 2 414 075
US - A - 2 796 103
US - A - 4 216 917

(73) Titulaire: **ROBOT-COUPE S.A., Zone Industrielle des Alouettes, F-71300 Montceau-les-Mines (FR)**

(72) Inventeur: **Behringer, John, 143 Main Street, Wickford Rhode Island 02852 (US)**
Inventeur: **Martin, Pierre, 9 rue des Bernardins, F-75005 Paris (FR)**

(74) Mandataire: **Viard, Jean, Cabinet VIARD 28 bis, avenue Mozart, F-75016 Paris (FR)**

## Description

La présente invention se rapporte aux appareils de traitement des aliments et, en particulier à un dispositif destiné à être utilisé avec de tels appareils pour leur permettre de traiter des aliments de grandes dimensions avec un maximum de facilité et de sécurité.

Des appareils de ce type, ménagers ou professionnels, actuellement en usage comprennent un socle supportant une cuve destinée à recevoir les aliments coupés, râpés etc. Un arbre d'entraînement fait saillie verticalement à partir du socle et traverse un orifice formé dans le fond de la cuve. A l'extrémité supérieure de l'arbre d'entraînement est monté un ensemble de coupe qui comporte une lame. Cette lame est elle-même disposée sur le bord en saillie d'une fente radiale formée dans un disque circulaire. Les aliments sont dirigés vers la lame par une goulotte verticale s'étendant à partir de la surface supérieure d'un couvercle qui est verrouillé sur et obture l'extrémité supérieure de la cuve. Un poussoir amovible est utilisé pour presser les aliments contre la lame, à travers la goulotte. Un tel appareil est décrit dans le Brevet Français No. 2 147 361.

Dans ces appareils, l'utilisateur est habituellement protégé de tout contact avec la lame en mouvement par une sécurité prévue dans le couvercle, sécurité qui agit sur un contacteur disposé dans le circuit d'alimentation du moteur qui n'est ainsi fermé que lorsque le couvercle est en place sur la cuve d'une part et verrouillé sur celle-ci, d'autre part. L'usage de ce contacteur n'élimine toutefois pas la possibilité d'un contact de la main de l'utilisateur avec la lame à travers la goulotte. Par suite, on a limité les dimensions de la goulotte. Malheureusement, cette limitation agit sur les dimensions des denrées qu'il est possible de traiter.

Différents essais ont été faits pour permettre à de tels appareils de traiter des aliments de grandes dimensions.

Dans le brevet US-A-4 216 917, un adaptateur glisse autour de la goulotte et est utilisé en coopération avec un poussoir captif. Dans cette réalisation, le contacteur de mise en marche du moteur est commandé par un organe solidaire de l'adaptateur seulement lorsque le couvercle est en place et verrouillé sur la cuve et lorsque l'adaptateur est monté autour de la goulotte. Cette réalisation ne donne pas pleinement satisfaction.

Une autre approche de solution est décrite dans le brevet FR-A-2 403 771 et utilisée dans des appareils professionnels. Elle consiste à utiliser une trémie tubulaire montée au-dessus de la cuve, la paroi interne de la trémie présentant des fentes verticales destinées à recevoir au moins une cloison radiale s'étendant jusqu'à la proximité immédiate du centre de la trémie. Il en résulte que la trémie est partagée, par les cloisons, en secteurs ouverts qui permettent de traiter des produits de dimensions variables. Le poussoir de la trémie présente des fentes pour permettre le passage de celui-ci, dans les secteurs, entre les cloisons. Ce poussoir est actionné par un piston et coopère avec un interrupteur de mise en marche du moteur lorsque le poussoir est dans une position telle qu'il obture un secteur d'au moins 180° de la surface d'entrée de la trémie.

Dans cette réalisation, la lame doit avoir une forme spéciale pour éviter la coupe des produits dans la région centrale qui reste ouverte après mise en place des cloisons. Par suite, pour éviter que les aliments ne pénètrent dans cette région, il est nécessaire de prévoir un organe tubulaire monté sur l'arbre moteur de manière à réduire le volume de la région centrale où, en tout état de cause, la coupe est mauvaise étant donné la vitesse tangentielle quasiment nulle de la lame de l'outil.

Bien que ce dispositif permette le traitement d'aliments de grandes dimensions, il nécessite, outre une lame spéciale, une pluralité de cloisons et un appareil spécial mal adaptés à un usage domestique.

Un objet de la présente invention est de réaliser un dispositif permettant de traiter des aliments de grandes dimensions tels que des choux ou des céleris, par exemple, dans des robots de cuisine, avec une sécurité maximum.

Selon l'invention, le dispositif d'introduction d'aliments de grandes dimensions pour un appareil de préparation d'aliments du type comprenant un socle, un arbre d'entraînement faisant saillie à partir du socle pour recevoir sur un moyeu un outil de coupe portant une lame, un moteur pour entraîner l'arbre d'entraînement en rotation, une cuve montée sur le socle de manière à entourer l'arbre d'entraînement, le dispositif comprenant une trémie tubulaire pouvant être montée sur la cuve, une cloison radiale faisant saillie intérieurement à partir de la paroi interne de ladite trémie, est caractérisé en ce que la paroi est terminée par un bossage dont le centre est aligné avec le moyeu et dont la surface externe surplombe ou recouvre le bord le plus central de la lame quand l'outil est monté sur le moyeu.

Selon une autre caractéristique de l'invention, le dispositif comprend un poussoir constitué par un disque présentant une fente radiale sur la longueur d'un rayon du disque, et par une tige creuse et présentant une fente longitudinale à partir de la fente radiale, lesdites fentes et l'intérieur de la tige creuse étant adaptés pour recevoir la cloison et le bossage lorsque le poussoir est introduit dans la trémie.

Avec ce dispositif, il est possible de traiter des aliments dont les dimensions radiales sont égales à la distance comprise entre le bossage et la surface interne de la trémie au-dessus de la lame, cette dimension étant nettement supérieure aux dimensions des goulottes standards. Le traitement des aliments de grandes dimensions peut être effectué en toute sécurité puisque l'appareil ne peut fonctionner qu'après que les aliments aient été disposés dans la trémie et que celle-ci ait été fermée par le couvercle. Le dispositif selon l'invention est de construction relativement simple et est pleinement compatible avec les appareils actuellement en usage dans les foyers.

D'autres caractéristiques et avantages de l'invention apparaîtront au cours de la description qui va suivre d'un mode particulier de réalisation, en regard des dessins qui représentent:

– La fig. 1, une section d'un dispositif selon l'invention;

– La Fig. 2, une vue éclatée du même dispositif;

– La fig. 3, une vue par dessus.

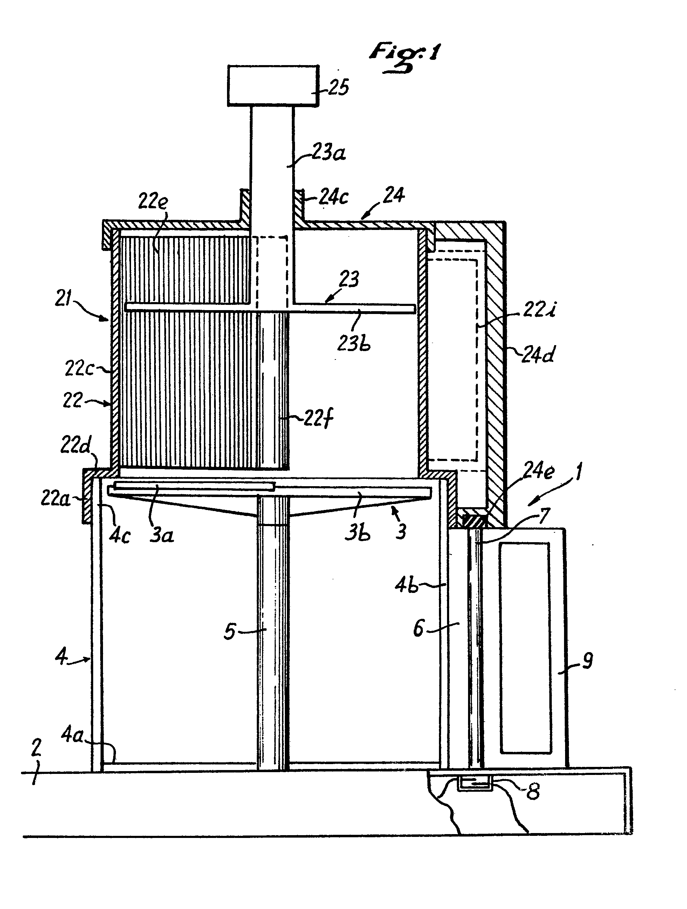

Sur la Fig. 1, l'appareil de traitement 1 comprend un socle 2 dans lequel est logé un moteur (non représenté) pour actionner l'appareil. La cuve 4, recevant les produits coupés par le disque 3a, est montée de manière amovible sur le socle 2. Le disque 3a est monté sur un moyeu 3b, de manière à former un ensemble de coupe 3 situé à la partie supérieure de la cuve 4.

L'ensemble 3 est monté sur un arbre d'entraînement 5 qui fait saillie verticalement à partir du socle 2 à travers le fond 4a de la cuve 4. Un canal 6, situé sur la paroi latérale 4b de la cuve 4 porte une tige 7 de matériau ferromagnétique tel que du fer doux ou une ferrite. Lorsque la tige 7 est magnétiquement polarisée, elle transmet cette polarisation à un contact ou interrupteur 8. L'interrupteur 8 est monté en série dans le circuit d'alimentation du moteur et, quand il est fermé, il permet la mise en route de celui-ci, et par suite de l'appareil.

Une poignée 9 s'étend à l'extérieur du conduit 6 et facilite la séparation de la cuve 4 et du socle 2.

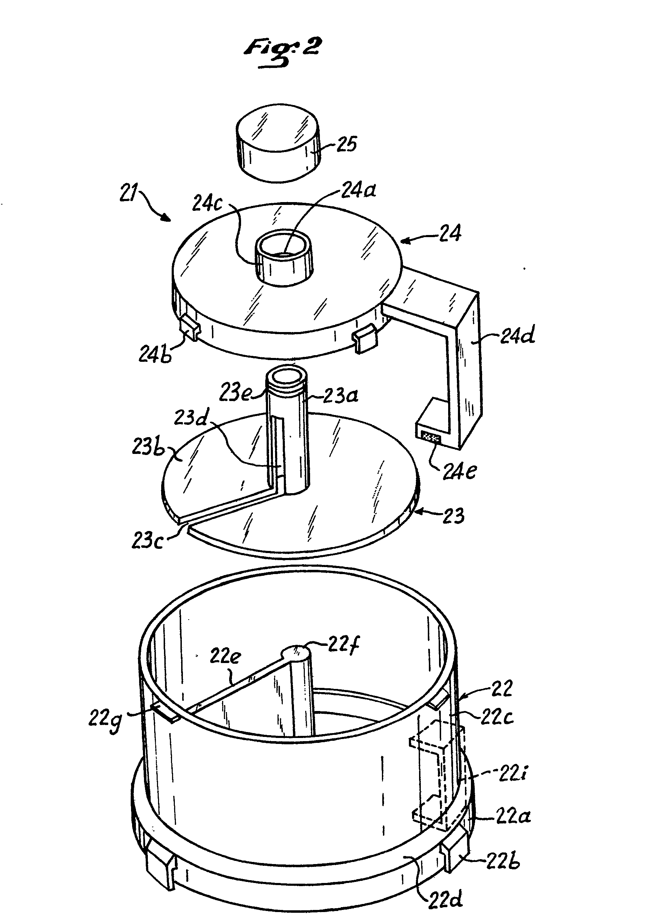

Selon l'invention, l'appareil 1 est de plus pourvu d'un dispositif 21 adapté pour permettre un traitement en toute sécurité d'aliments de grandes dimensions. Plus particulièrement, une trémie tubulaire 22 est montée sur la partie ouverte 4c de la cuve 4 de manière à surplomber la lame 3a. La trémie 22 comprend une jupe inférieure 22a qui recouvre le bord supérieur 4c de la cuve 4 et est pourvue de pattes 22b (Fig. 2) qui coopèrent avec des tenons de verrouillage (non représentés) pour donner un verrouillage de type connu.

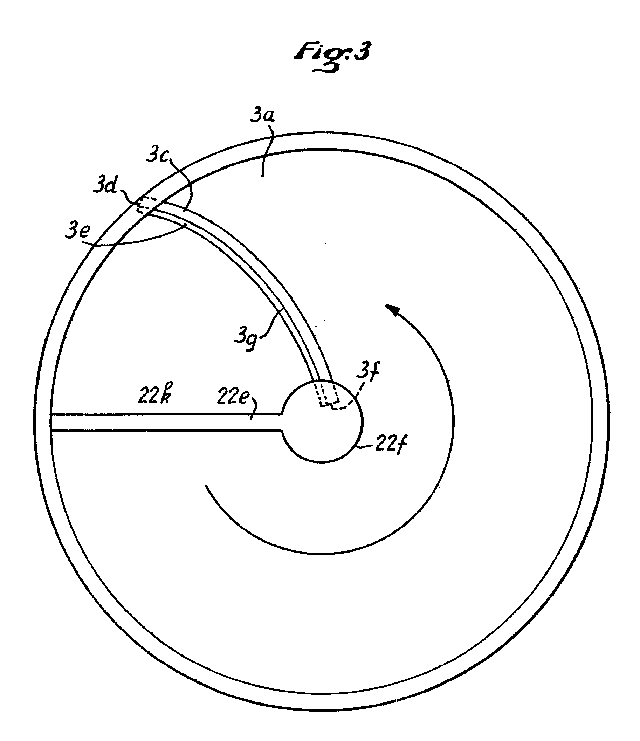

Au-dessus de la jupe 22a se trouve une section supérieure 22c. Cette section surplombe le disque 3a à l'intérieur de l'enveloppe du côté extérieur 3d de la lame de coupe 3c fixée sur le côté surélevé de la fente en arc 3e du disque. (Fig. 3). Dans l'exemple représenté, une surface annulaire 22d est formée entre la surface supérieure de la jupe 22a et l'extrêmité inférieure de la section 22c.

Une cloison ou partition 22e s'étend radialement, à l'intérieur de la trémie, à partir de la paroi interne de la section supérieure 22c et se termine, au centre de la trémie par un bossage 22f. Le bossage 22f est concentrique au moyeu 5 et au disque 3a et a un diamètre tel qu'il recouvre le côté le plus central 3f de la lame 3c.

Comme on peut le voir, la distance entre la surface externe du bossage et la surface interne de la section supérieure 22c au-dessus du disque 3a définit la dimension maximale des légumes ou plus généralement des aliments à traiter qui peuvent être introduits dans la trémie 22 pour leur coupe par la lame 3c. Cette dimension est légèrement inférieure au rayon de la cuve 4 et par suite est notablement supérieure à la section des goulottes traditionnelles. Des aliments de dimensions supérieures peuvent ainsi être coupés, émincés ou râpés avec le dispositif 21. De plus, ces opérations peuvent être exécutées en toute sécurité comme cela sera décrit plus en détail ci-dessous.

Un poussoir 23 comprend une tige creuse 23a dont la surface interne correspond sensiblement au diamètre du bossage 22f. Un disque plat 23b est monté sur la tige 23a et s'étend radialement sensiblement sur un rayon égal à celui de la section supérieure 22c. Une fente radiale 23c et une fente longitudinale 23d formées dans le disque et la tige permettent à ces éléments de glisser vers le bas par dessus la section plane de la cloison 22e. La fente 23d est de longueur telle que le mouvement du disque 23b vers le bas soit stoppé au-dessus de la lame 3c.

La tige 23a passe à travers une ouverture 24a d'un couvercle 24 muni de pattes 24b permettant un verrouillage par rotation du couvercle sur l'extrêmité supérieure ouverte de la section 22c, au moyen de tenons 22g. Un collier 24c forme guide pour la tige 23a dont l'extrêmité supérieure 23e est filetée et reçoit un embout amovible 25.

Une commande 24d est portée par le couvercle 24 et renferme à sa partie inférieure un aimant 24e. La commande a la forme d'une poignée et s'étend sur toute la hauteur de la trémie tubulaire 22 de sorte que son extrêmité inférieure s'appuie sur le haut du conduit 7 lorsque le couvercle 24 est verrouillé sur la trémie 22, la trémie 22 étant verrouillée sur la cuve 4. C'est seulement lorsque ces conditions sont remplies que l'interrupteur 8 peut être fermé ce qui permet la mise en marche de l'appareil.

Le fonctionnement du dispositif est le suivant: la trémie 22 est d'abord verrouillée sur la cuve 4, elle-même verrouillée sur le socle 2. Les aliments sont alors introduits dans la trémie dans la section supérieure 22c, à partir du niveau 22h de la paroi 22e qui est la face arrière lorsque le disque tourne dans la direction indiquée. Avec le présent dispositif, plusieurs légumes, par exemple, de dimension radiale maximum peuvent être disposés dans la trémie 22 de sorte que non seulement la taille des légumes ou autres aliments peut être augmentée mais également la capacité de traitement à chaque opération de l'appareil.

Lorsque les denrées sont introduites dans la trémie, le couvercle portant le poussoir est monté sur la trémie et verrouillé par rotation sur celle-ci. C'est seulement alors que l'aimant 24e est amené au contact de la tige magnétique 7 par la commande 24d. La tige 7 transmet le flux magnétique 7 de l'aimant à l'interrupteur 8 et le ferme ce qui permet la mise en marche du moteur. L'utilisateur est protégé du contact avec la lame en rotation par le couvercle 24c bien que des aliments volumineux puissent être coupés.

Lorsque la lame 3c tourne, la cloison 22e maintient les denrées et les empêche de tourner avec la lame. Le bossage 22f, étant donné sa section courbe coopère avec la cloison pour maintenir les produits en place en les pressant contre la cloison. De plus, l'extension de la surface extérieure du bossage et celle de la surface interne de la section supérieure, comme il a été décrit ci-dessus, empêche la création de zones dans lesquelles les aliments ne seraient pas soumis à l'action du bord 3g de la lame 3c ce qui se traduirait par des arrachements ou d'autres actions de coupe mauvaises. Cela peut être vu sur la Fig. 3 où le recouvrement du bord le plus central 3f de la lame 3c par le bossage 22f interdit aux produits de se placer radialement par rapport au trajet de ce bord. De même, le recouvrement du bord extérieur 3d par la surface interne de la section 22c évite que les produits ne se placent radialement par rapport au trajet suivi par le bord 3d.

Le dispositif 21 permet ainsi de traiter de gros aliments à l'aide de l'appareil 1 avec l'action de coupe souhaitable.

Dans une variante du dispositif 21, la trémie 22 peut être pourvue d'une poignée 22i, représentée en traits pointillés sur la Fig. 2, poignée qui facilite le montage de la trémie 22 sur la cuve 4. La poignée 22i peut être alignée avec la poignée 24d du couvercle ce qui permet de démonter les deux éléments simultanément, comme celà apparaît sur la Fig. 1.

De nombreuses variantes peuvent être introduites sans sortir du cadre de la présente invention. C'est ainsi que la commande magnétique peut être remplacée par une commande mécanique. La surface externe du bossage 22f peut présenter différentes formes dans la mesure où cette forme définit un trajet courbe par rapport au trajet de la lame courbe 3c. La cloison 22e peut être intégrée à la section 22c de la trémie ou être montée amovible sur celle-ci.

## Revendications

1. Dispositif d'introduction d'aliments de grandes dimensions pour un appareil de préparation d'aliments du type comprenant un socle (2), un arbre d'entraînement faisant saillie à partir du socle (2) pour recevoir sur un moyeu (5) un outil de coupe (3) portant une lame (3a), un moteur pour entraîner l'arbre d'entraînement en rotation, une cuve (4) montée sur le socle (2) de manière à entourer l'arbre d'entraînement, le dispositif comprenant une trémie tubulaire (22) pouvant être montée sur la cuve (4), une cloison radiale (22e) faisant saillie intérieurement à partir de la paroi interne de la trémie (22), caractérisé en ce que la paroi (22) est terminée par un bossage (22f) dont le centre est aligné avec le moyeu (5) et dont la surface externe surplombe ou recouvre le bord (3f) le plus central de la lame (3a) quand l'outil (3) est monté sur le moyeu (5).

2. Dispositif selon la revendication 1, caractérisé en ce que la surface interne de la trémie (22) recouvre ou surplombe le bord (3d) le plus extérieur de la lame (3a) quand l'outil (3) est monté sur le moyeu (5).

3. Dispositif selon l'une des revendications 1 ou 2, caractérisé en ce qu'il comprend un poussoir (23) constitué par un disque (23b) présentant une fente radiale (23c) sur la longueur d'un rayon du disque, et par une tige (23a) creuse et présentant une fente longitudinale (23d) à partir de la fente radiale (23c), lesdites fentes et l'intérieur de la tige creuse étant adaptés pour recevoir la cloison (22e) et le bossage (22f) lorsque le poussoir (23) est introduit dans la trémie (22).

4. Dispositif selon la revendication 3, caractérisé en ce qu'il comprend en outre, un couvercle (24) pouvant être monté sur la trémie (22), ledit couvercle présentant un orifice (24a) pour le passage de la tige (23a) du poussoir (23).

5. Dispositif selon la revendication 4, caractérisé en ce que le poussoir (23) comprend, en outre, un embout (25) monté amovible sur la tige creuse (23a) au-dessus de l'ouverture (24a).

6. Dispositif selon la revendication 3, caractérisé en ce que la fente longitudinale (23d) a une hauteur telle que son extrémité vienne en butée contre la face supérieure de la cloison (22e) lorsque le disque (23b) occupe sa position la plus basse, pour éviter tout contact du disque (23b) avec la lame de coupe (3a) lorsque l'outil (3) est monté sur le moyeu (5).

7. Dispositif selon la revendication 4, caractérisé en ce que l'appareil de traitement incluant un interrupteur de sécurité d'assemblage (8), le couvercle (24) porte un organe de commande (24d) pour agir sur l'interrupteur (8).

8. Dispositif selon la revendication 7, caractérisé en ce que l'organe de commande (24d, 24e) a la forme d'une poignée.

9. Dispositif selon la revendication 8, caractérisé en ce que la trémie (22) comporte une autre poignée (22i).

10. Dispositif selon la revendication 9, caractérisé en ce que la poignée (22i) se loge à l'intérieur de la poignée (24d) quand la poignée (24d) est en position pour commander l'interrupteur (8).

11. Dispositif selon la revendication 7, caractérisé en ce que l'organe de commande (24d) s'étend jusqu'à la partie inférieure de la trémie (22).

12. Dispositif selon la revendication 7, caractérisé en ce que la trémie (22) comprend des moyens de verrouillage (22b) sur la cuve (4), le couvercle (24) comprenant des moyens de verrouillage (24b) sur la trémie (22).

13. Dispositif selon la revendication 12, caractérisé en ce que l'organe de commande (24d) est positionné de sorte que l'interrupteur (8) ne soit commandé que lorsque la trémie (22) est verrouillée sur la cuve (4) et lorsque, simultanément, le couvercle (24) est verrouillé sur la trémie (22).

## Claims

1. Device for introducing large items of food into a food preparation appliance of the type comprising a stand (2), a drive shaft projecting from the stand (2) for accommodating on a hub (5) a cutting tool (3) having a blade (3a), a motor for driving the drive shaft in rotational movement, a bowl (4) mounted on the stand (2) so as to surround the drive shaft, the device comprising a tubular hopper (22) mountable on the bowl (4), a radial partition (22e) projecting internally from the internal wall of the hopper (22), characterised in that the wall (22) terminates in a boss (22f) the centre of which is aligned on the hub (5) and whose external surface overhangs or covers the most central edge (3f) of the blade (3a) when the tool (3) is mounted on the hub (5).

2. Device according to claim 1, characterised in that the internal surface of the hopper (22) covers or overhangs the outermost edge (3d) of the blade (3a) when the tool (3) is mounted on the hub (5).

3. Device according to one of claims 1 or 2, characterised in that it comprises a push member (23) constituted by a disc (23b) having a radial slot (23c) over the length of a radius of the disc, and by a hollow stem (23a) having a longitudinal slot (23d) starting from the radial slot (23c), the said slots and the interior of the hollow stem being adapted to receive the partition (22e) and the boss (22f) when the push member (23) is introduced into the hopper (22).

4. Device according to claim 3, characterised in that it also comprises a cover (24) mountable on the hopper (22), the said cover comprising an orifice (24a) for the passage therethrough of the stem (23a) of the push member (23).

5. Device according to claim 4, characterised in that the push member (23) also comprises an end piece (25) mounted detachably on the hollow stem (23a) above the orifice (24a).

6. Device according to claim 3, characterised in that the longitudinal slot (23d) is of such a height that its end comes to abut on the upper face of the partition (22e) when the disc (23b) occupies its lowest position, to prevent any contact between the disc (23b) and the cutting blade (3a) when the tool (3) is mounted on the hub (5).

7. Device according to claim 4, characterised in that, with the processing appliance comprising an assembly safety switch (8), the cover (24) comprises a control element (24d) for acting on the switch (8).

8. Device according to claim 7, characterised in that the control element (24d, 24e) is in the form of a handle.

9. Device according to claim 8, characterised in that the hopper (22) comprises another handle (22i).

10. Device according to claim 9, characterised in that the handle (22i) is accommodated within the handle (24d) when the handle (24d) is in the position for controlling the switch (8).

11. Device according to claim 7, characterised in that the control element (24d) extends to the lower portion of the hopper (22).

12. Device according to claim 7, characterised in that the hopper (22) comprises means (22b) for locking on to the bowl (4), the cover (24) comprising means (24b) for locking on to the hopper (22).

13. Device according to claim 12, characterised in that the control element (24d) is so positioned that the switch (8) is operated only when the hopper (22) is locked on the bowl (4) and when, at the same time, the cover (24) is locked on the hopper (22).

## Patentansprüche

1. Vorrichtung zum Einführen von Lebensmitteln grosser Abmessungen in eine Maschine zur Vorverarbeitung von Lebensmitteln, die mit einem Sockel (2) und einem Antriebsarm versehen ist, der von diesem Sockel (2) abragt und auf einer Nabe (5) ein Schneidwerkzeug (3) mit einer Klinge (3a) aufnimmt, mit einem Antriebsmotor, der den Antriebsarm in Rotation versetzt, mit einem Behälter (4), der auf dem Sockel (2) so angeordnet ist, dass er den Antriebsarm umgibt und mit einem rohrförmigen Füllaufsatz (22), der auf dem Behälter (4) montierbar ist und mit einer von der Innenwand des Füllaufsatzes (22) nach innen abragenden radialen Zwischenwand (22e), dadurch gekennzeichnet, dass die Wand (22) in einem Ansatz (22f) endet, dessen Zentrum zu der Nabe (5) ausgerichtet ist und dessen Aussenfläche über den am zentralsten liegenden Rand (3f) der Klinge (3a) greift oder diesen abdeckt, wenn das Werkzeug (3) auf der Nabe (5) montiert ist.

2. Vorrichtung nach Anspruch 1, dadurch gekennzeichnet, dass die Innenfläche des Füllaufsatzes (22) den äussersten Rand (3d) der Klinge (3a) abdeckt oder übergreift, wenn das Werkzeug (3) auf der Nabe (5) montiert ist.

3. Vorrichtung nach einem der Ansprüche 1 oder 2, dadurch gekennzeichnet, dass ein Drücker (23) vorgesehen ist, der aus einer Scheibe (23b) mit einem radial über die Länge eines Radius der Scheibe verlaufenden Schlitz (23c) und aus einer hohlen Stange (23a) besteht, die von dem radialen Schlitz (23) aus einen Längsschlitz (23d) aufweist, wobei diese Schlitze und der Innenraum der Hohlstange geeignet zur Aufnahme der Zwischenwand (22e) und des Ansatzes (22f) ausgebildet sind, wenn der Drücker (23) in den Füllaufsatz (22) eingeführt wird.

4. Vorrichtung nach Anspruch 3, dadurch gekennzeichnet, dass ausserdem ein Deckel (24) vorgesehen ist, der auf dem Füllaufsatz (22) anbringbar ist und der mit einer Öffnung (24a) zum Durchführen der Stange (23a) des Drückers (23) versehen ist.

5. Vorrichtung nach Anspruch 4, dadurch gekennzeichnet, dass der Drücker (23) ausserdem einen fest auf der Hohlstange (23a) und oberhalb der Öffnung (24a) angeordneten Stopfen (25) aufweist.

6. Vorrichtung nach Anspruch 3, dadurch gekennzeichnet, dass der Längsschlitz (23d) eine solche Höhe aufweist, dass sein äusseres Ende an der Oberseite der Zwischenwand (22e) zum Anschlag kommt, wenn die Scheibe (23b) ihre tiefste Stellung einnimmt, so dass dadurch jede Berührung der Scheibe (23b) mit der Schneidklinge (3a) vermieden wird, wenn das Werkzeug (3) auf der Nabe (5) angebracht ist.

7. Vorrichtung nach Anspruch 4, dadurch gekennzeichnet, dass die Behandlungsmaschine einen Zusammenbau-Sicherheitsschalter (8) und der Deckel (24) ein Steuerorgan (24d) aufweist, um mit dem Schalter (8) zusammenzuwirken.

8. Vorrichtung nach Anspruch 7, dadurch gekennzeichnet, dass das Steuerorgan (24d, 24e) die Form eines Handgriffes aufweist.

9. Vorrichtung nach Anspruch 8, dadurch gekennzeichnet, dass der Füllaufsatz (22) einen weiteren Handgriff (22i) besitzt.

10. Vorrichtung nach Anspruch 9, dadurch gekennzeichnet, dass der Handgriff (22i) im Inneren des Handgriffes (24d) liegt, wenn der Handgriff (24d) seine Stellung zur Steuerung des Schalters (8) einnimmt.

11. Vorrichtung nach Anspruch 7, dadurch gekennzeichnet, dass das Steuerorgan (24d) sich bis in den unteren Bereich des Füllaufsatzes (22) erstreckt.

12. Vorrichtung nach Anspruch 7, dadurch gekennzeichnet, dass der Füllaufsatz (22) mit Einrichtungen zum Verriegeln (22b) auf dem Behälter (4) und der Deckel (24) mit Einrichtungen zum Verriegeln (24b) auf dem Füllaufsatz (22) versehen ist.

13. Vorrichtung nach Anspruch 12, dadurch gekennzeichnet, dass das Steuerorgan (24d) so angeordnet ist, dass der Schalter (8) nur betätigt wird, wenn der Füllaufsatz (22) auf dem Behälter (4) und wenn gleichzeitig der Deckel (24) auf dem Füllaufsatz (22) verriegelt ist.

Fig. 1

Fig. 2

## Fig.3